# EUROPÄISCHE PATENTANMELDUNG

(11) **EP 3 217 465 A1**
(43) Veröffentlichungstag der Anmeldung: **13.09.2017**
(21) Anmeldenummer: 16401017.5
(22) Anmeldetag: 08.03.2016
(51) Int. Cl.: H01M 10/42, H01M 10/44, H01M 10/46, H01M 10/48, H02J 7/00, H01M 16/00

(54) **SYSTEM ZUR SPEICHERUNG ELEKTRISCHER ENERGIE**

(71) Anmelder: BOS Balance of Storage Systems AG, 89171 Illerkirchberg (DE)
(72) Erfinder: Kündiger, Thomas, 89171 Illerkirchberg (DE); Seckinger, Benjamin, 89171 Illerkirchberg (DE); Adelmann, Peter, 89171 Illerkirchberg (DE)
(74) Vertreter: Wiese, Gerhard

(57) **Zusammenfassung**

Die Erfindung betrifft ein Speichersystem (10) zur Speicherung elektrischer Energie mit wenigstens einem ersten Energiespeicher (11) und mit wenigstens einem zweiten Energiespeicher (12), die eine unterschiedliche Zyklenfestigkeit und/oder Lade- und Entladecharakteristik aufweisen und durch eine Parallelschaltung zur Entladung mit wenigstens einem elektrischen Verbraucher (18; 19) und zur Ladung mit wenigstens einer Energiequelle (16; 17) verbunden sind. Für eine verbesserte Nutzung der Vorteile beider Batteriearten ist erfindungsgemäß vorgesehen, dass beide Energiespeicher (11; 12) eine zumindest annähernd gleiche Nennspannung aufweisen und dass zwischen den beiden Energiespeichern (11; 12)) eine als Strombegrenzung (22; 46) und/oder als Stromsteuerung oder Stromregelung (20; 30; 40; 50; 60; 70) und/oder als Trennschalter (24; 34; 36) ausgebildete Schaltung (20; 30; 40; 50; 60; 70) zur Steuerung einer vorrangigen Ladung des wenigstens einen ersten Energiespeichers (11) und/oder zur Steuerung einer vorrangigen Entladung des wenigstens einen zweiten Energiespeichers (12) vorgesehen ist.

## Beschreibung

Die Erfindung betrifft ein Speichersystem zur Speicherung elektrischer Energie gemäß dem Oberbegriff des Patentanspruchs 1.

Wenn in dieser Anmeldung von Energiespeicher gesprochen wird, sind damit alle Formen elektrochemischer Speicher bzw. Akkumulatoren gemeint. Der Begriff Batterie beschreibt den Zusammenschluss vorrangig mehrerer Akkumulatorzellen in Reihen- oder Parallelschaltung. Umgekehrt sind auch bei einer Verwendung der Begriffe "Akkumulator" oder "Batterie" alle Formen von wiederholt aufladbaren elektrischen bzw. elektrochemischen Energiespeichern umfasst.

Der Begriff Schaltung beschreibt eine elektrische oder elektronische Schaltung, also den Zusammenschluss von elektrischen, elektronischen und elektromechanischen Einzelelementen und wird für die erfindungsgemäße Anordnung der entsprechenden Elemente verwendet. Das erfindungsgemäße Batteriesystem bzw. Hybridsystem besteht damit wenigstens aus dem ersten und zweiten Energiespeicher und einer Schaltung.

Der Begriff Laderegler beschreibt eine elektrische oder elektronische Schaltung, die die bereitgestellte Energie in eine für den entsprechenden Akkumulator geeignete Form wandelt, elektrische Lasten regelt oder schaltet und Schutzschaltungen wie Über- und Unterspannungsschutz des Akkumulators beinhaltet.

Der Balancer bzw. die Balancerschaltung ist eine elektronische Schaltung, die die Spannung der einzelnen Akkumulatorzellen überwacht und bei ungleichen Spannungen der einzelnen Zellen entsprechende Maßnahmen zum Ausgleich der Zellspannungen einleitet.

Hybridsysteme, die versuchen, die Vorteile von Bleiakkumulatoren mit anderen Energiespeichern zu kombinieren sind bereits in mehreren Varianten bekannt. Dabei sind Bleiakkumulatoren als preisgünstiger, bewährter Energiespeicher bekannt, zu dem es viele passende Geräte gibt. Als Nennspannungen sind bei diesen vor allem 6V, 12V und Vielfache davon, insbesondere 24V oder 48V, üblich. Die Lebensdauer von Bleiakkumulatoren ist jedoch von vielen Faktoren wie Temperatur, Entladetiefe usw. abhängig. Die Lebensdauer von Bleiakkumulatoren wird zudem durch Sulphatierung extrem verringert, wenn der Akkumulator nicht in regelmäßigen Abständen auf 100% Ladezustand (auch "State of Charge" oder "SOC" genannt) aufgeladen wird. Derartige Bleiakkumulatoren wurden bereits mit einem zweiten Energiespeicher mit anderen Eigenschaften kombiniert, um ein vorteilhaftes Gesamtsystem zu bekommen. Als Energiespeicher kommen häufig Batterien bestehend aus mehreren parallel oder in Reihe geschalteten Akkumulator-Zellen zum Einsatz.

Ein System mit zwei verschiedenen parallelgeschalteten Batterien ist zunächst überbestimmt, da jede der Batterien aufgrund ihrer Eigenschaften entsprechend einer Spannungsquelle eine individuelle Ausgangsspannung hat, was Umladeströme von einer Batterie zur anderen zur Folge hat, um die Spannungen anzugleichen. Ein alternatives Hin- und Herschalten der Last zwischen den Batterien bedeutet, dass kein paralleler (unterstützender) Betrieb möglich ist, also ebenfalls jede Batterie mit maximal hohen Strömen belastet wird. Alternativ werden bislang DC/DC Wandler eingesetzt, um unterschiedliche Spannungen der Batterien auszugleichen, dann müssen die Spannungen der beiden Energiespeicher nicht gleich sein (siehe US 2015/0270731 A1). Derartige Systeme sind zwar universell einsetzbar, die DC/DC Wandler stellen aber einen technischen Zusatzaufwand dar und bei einer Umwandlung in einem DC/DC-Wandler entstehen zusätzliche Verluste, da deren maximaler Wirkungsgrad limitiert ist.

Aufgabe der Erfindung ist es, ein Speichersystem bzw. eine Lade-/Entladeregelung zu schaffen, bei dem eine erste Batterie und wenigstens eine zweite Batterie, die eine unterschiedliche Zyklenfestigkeit und/oder Lade- und Entladecharakteristik aufweisen, zur optimalen Nutzung der Vorteile beider Batterien ohne DC/DC-Wandler zusammengeschaltet sind.

Diese Aufgabe wird durch ein Speichersystem mit den Merkmalen des Anspruchs 1 gelöst. Vorteilhafte Ausgestaltungen der Erfindung sind in den Unteransprüchen angegeben.

Für eine lange Lebensdauer wird die als erste Batterie oder Gruppe gleichartiger erster Batterien vorgesehene Bleibatterie vorrangig möglichst häufig auf 100% vollgeladen, wodurch bei Bleibatterien einer Sulphatierung wirksam entgegengewirkt wird, wodurch es möglich wird, eine höhere Batterielebensdauer auch bei zeitlich begrenzten Ladeperioden zu erreichen. Die Vermeidung vorzeitiger Batterieausfälle schont die natürlichen Ressourcen durch geringeren Verbrauch an Blei und einem viel seltener erforderlichen Recyclingprozess. Besonders vorteilhaft ist für eine Bleibatterie ein Vollladen bei konstanter Spannung und geringem Strom, während bei vielen Anwendungen (PV-Generator, Lichtmaschine, Dieselgenerator) ein höherer Strom zur Verfügung steht, der beim Laden mit konstanter Spannung nicht vollständig genutzt werden kann. Das erfindungsgemäße Hybridspeichersystem erlaubt es, die Überschüsse, die die Bleibatterie nicht aufnehmen kann, in die vorzugsweise als Lithiumbatterie mit geringerer Ladekapazität ausgebildete zweite Batterie zu laden und diese auch bevorzugt wieder zu entladen.

In einer vorteilhaften Ausgestaltung wird die erste Batterie oder Gruppe von in Reihe geschalteten ersten Batterien von einem oder mehreren Bleiakkumulatoren gebildet. Die zweite Batterie oder Gruppe von in Reihe geschalteten zweiten Batterien wird bevorzugt von einem oder mehreren Lithium-Akkumulatoren, Lithium-Eisen-Phosphat- Akkumulatoren, Lithium-Schwefel- Akkumulatoren oder Lithium-Luft- Akkumulatoren gebildet. Diese zweiten Batterien haben häufig eine hohe Zyklenfestigkeit; die Anschaffungskosten sind jedoch derzeit höher als die eines Bleiakkumulators. Die zweiten Batterien bzw. Akkumulatoren zeichnen sich zudem durch einen hohen elektrischen Wirkungsgrad aus. Wichtig ist dabei, dass die Spannung des zweiten Akkumulators so gewählt wird, dass weite Teile der Ladung und Entladung in einem Spannungsbereich stattfinden, der der Ladespannung des Bleiakkumulators sehr ähnlich ist und höher ist als die Spannung des Bleiakkumulators bei der Entladung. Besonders geeignet ist hier beispielsweise das Zusammenschalten von drei Zellen eines Bleiakkumulators mit einer Nennspannung von jeweils ca. 2V und zwei Zellen eines Lithium-Eisen-Phosphat-Akkumulators (LiFePO₄, LiFeYPO₄ und ähnliche Lithiumakkumulatoren) mit jeweils ca. 3,25V Nennspannung, oder ein Vielfaches dieser Anordnung. Dies wird zusätzlich durch den Verlauf der Lade- und Entladespannung eines Lithium-Eisen-Akkumulators begünstigt, der über weite Teile des Ladezustandes nur sehr wenig von der Nennspannung abweicht.

Gemäß der Erfindung ist weiterhin vorgesehen, dass die von einer Strombegrenzung, einer Stromregelung oder Stromsteuerung und/oder von wenigstens einem Trennschalter gebildete Schaltung die bevorzugte Ladung des ersten Energiespeichers ermöglicht sowie die Entladung des ersten und des zweiten Energiespeichers derart steuert, dass bei einem kleinen Entladestrom oder zum Laden des ersten Energiespeichers vorrangig der zweite Energiespeicher entladen wird und bei einem großen Entladestrom beide Energiespeicher synchron entladen werden, wofür durch die Strombegrenzung ein Spannungsgefälle zwischen dem ersten und dem zweiten Energiespeicher aufrechterhalten wird. Dadurch ist es möglich, ein Vollladen des ersten Energiespeichers sicherzustellen. Ebenso ist es damit möglich, den Lade- und Entladestrom des zweiten Energiespeichers zu begrenzen, womit der zweite Energiespeicher keinen übermäßig hohen Lade- und Entladeströmen ausgesetzt ist, was sich positiv auf dessen Lebensdauer auswirkt und eine kleinere Dimensionierung der Komponenten für eine Balancer- und Schutzschaltung des zweiten Energiespeichers erlaubt. Zudem kann der Trennschalter auch als Schutzschalter verwendet werden, der den zweiten Energiespeicher bei zu hohen oder zu tiefen Spannungen vom ersten Energiespeicher trennt, um Überspannung oder eine zu tiefe Entladung zu vermeiden. Die Ausführung dieser Schaltung kann auf unterschiedliche Weise verwirklicht werden. Diese Varianten sind detailliert in den Ansprüchen 4 bis 10 aufgezeigt.

Weiterhin ist vorteilhaft vorgesehen, dass über die Schaltung die Nachladung des ersten Energiespeichers aus dem zweiten Energiespeicher oder das bevorzugte Laden oder Entladen eines der Energiespeicher gesteuert werden kann. Dies ist dann sinnvoll, wenn der erste Energiespeicher - insbesondere die Bleibatterie(n) - durch begrenzte Ladezeit noch nicht vollständig aufgeladen ist. Die Bleibatterie kann dann auf dem Spannungslevel der Lithiumbatterie nachgeladen werden. Ebenso ist es möglich auf diesem Spannungslevel auch kleine Lasten zu versorgen, deren Strombedarf geringer ist als es die Strombegrenzung bzw. Stromregelung zulässt. Dieses Nachladen des ersten Energiespeichers ist nicht in jedem Fall gewünscht, da die die Gesamtlebensdauer begrenzende verfügbare Anzahl von Ladezyklen durch die Umladeströme beansprucht würde, wodurch die Lebensdauer des Systems reduziert würde. Das Nachladen kann daher durch den Einsatz des Trennschalters auch gezielt unterbunden werden, beispielsweise bei einer genügend vollgeladenen Bleibatterie, an der zum Zeitpunkt keine Entladung durch elektrische Lasten stattfindet.

Für ein kompaktes, einfach zu installierendes System ist es vorteilhaft, wenn die erfindungsgemäße Schaltung in einen Laderegler integriert ist. Dieser Laderegler ist häufig für eine bestimmte Energiequelle optimiert, wie ein Solar- oder Windkraftladeregler oder ein Laderegler zum Nachladen der Batterien aus dem Stromnetz. Wenn der zweite Energiespeicher - insbesondere die Lithiumbatterie(n) - und der Laderegler in einer Einheit zusammengeführt sind, ermöglicht dies den Anschluss des Hybridladereglers mit der gleichen Anschlussbelegung wie bei einem einfachen Laderegler für Bleibatterien, wo an drei Anschlusspaaren (je + und -) die Energiequelle, der Bleiakkumulator und die Lasten angeschlossen sind. Beispielhaft sei hier der Laderegler Steca PR 10-30 der Steca Elektronik GmbH, Memmingen, genannt. Dies hat den Vorteil, dass diese elektronische Schaltung mit den für Lithiumbatterien oft notwendigen Balancer- und Schutzschaltungen zu einer Einheit zusammengefasst werden kann und ermöglicht am Einsatzort eine einfache Installation mit wenigen Komponenten, die einfach zu verbinden sind.

Vorteilhaft ist in diesem Zusammenhang ein weiterer Anschluss für Lasten, der nur dann zugeschaltet wird, sobald das System einen definierten Ladezustand erreicht hat, um eine Priorisierung bei Lastabschaltungen zu ermöglichen. So ist es durch einfaches Anschließen an verschiedenen Kontakten möglich, dass z.B. ein Ventilator nur bei ausreichendem Ladezustand des zweiten Energiespeichers betrieben wird, während der erste Energiespeicher für höher priorisierte Lasten wie die Beleuchtung zur Verfügung steht.

Alternativ dazu ist vorgesehen, dass die Strombegrenzung, die Stromregelung und/oder der Trennschalter als eigenständige Schaltung zwischen dem ersten und zweiten Energiespeicher ausgebildet ist. Ein derart ausgebildetes System ist sehr universell verwendbar, da die erste Batterie, ausgeführt als Bleiakkumulator, direkt an einer Vielzahl von marktüblichen Produkten wie Ladereglern oder Generatoren angeschlossen werden kann, die für die Ladung entsprechender Akkutypen ausgelegt sind. Vorzugsweise wird in die erfindungsgemäße Schaltung auch die Laderegelung der zweiten Batterie mit Schutz- und Balancerschaltung integriert, damit die zweite Batterie inklusive der Schaltung mit geringem Installationsaufwand mit der Bleibatterie verbunden werden kann. Diese Lösung eignet sich damit auch für ein einfaches Nachrüsten bereits bestehender Bleibatteriesysteme, ohne dass Komponenten des bisherigen Systems ausgetauscht werden müssen.

Gemäß einer vorteilhaften Ausgestaltung der Erfindung ist vorgesehen, dass bei einer Schaltung eines erfindungsgemäßen Systems die Strombegrenzung als ohmscher Widerstand, als verstellbarer Widerstand, als PTC-Sicherung oder als Halbleiter ausgebildet ist. Die Strombegrenzung sorgt dafür, dass bei Überschreiten eines definierten Stromes ein Spannungsgefälle zwischen den beiden Energiespeichern erzeugt wird, um die Versorgung elektrischer Lasten aus beiden Energiespeichern parallel zu ermöglichen, oder die priorisierte Ladung des ersten Energiespeichers sicherzustellen. Durch die ähnliche Spannung beider Energiespeicher ist das notwendige Spannungsgefälle zwischen den beiden Energiespeichern relativ klein. Dieses Spannungsgefälle kann durch verschiedene Bauteile erzeugt werden. Bei einem ohmschen Widerstand ist der Zusammenhang zwischen Strom und Spannungsabfall linear, was eine Begrenzung des Stromes ermöglicht, jedoch auch ein Spannungsgefälle bzw. eine ständige Verlustleistung in allen Arbeitsbereichen mit sich bringt. Vorteilhaft für die Effizienz ist es daher, den Widerstand je nach Betriebszustand verändern zu können, wie es beim verstellbaren Widerstand oder einem Bauelement aus Halbleitern möglich ist. Damit entsteht nur dann eine Verlustleistung im Bauelement, wenn es für den Betrieb des Systems notwendig ist. Ein besonders geeignetes Bauelement für eine einfache Umsetzung eines erfindungsgemäßen Systems ist die PTC-Sicherung, die bis zum Erreichen eines bestimmten Stromes einen sehr geringen Widerstand aufweist und bei Überschreiten dessen den Widerstand so weit erhöht, bis sich eine konstante Temperatur bzw. Wärmeabgabe am Bauelement einstellt. Als PTC-Widerstand sind beispielsweise Bauteile vom Typ Multifuse® der Firma Bourns oder vom Typ Polyswitch der Tyco International verwendbar. Während ein verstellbarer Widerstand oder Halbleiter angesteuert oder geregelt werden muss, regelt dieses Bauelement den Strom zwischen den Batterien ohne externe Ansteuerung.

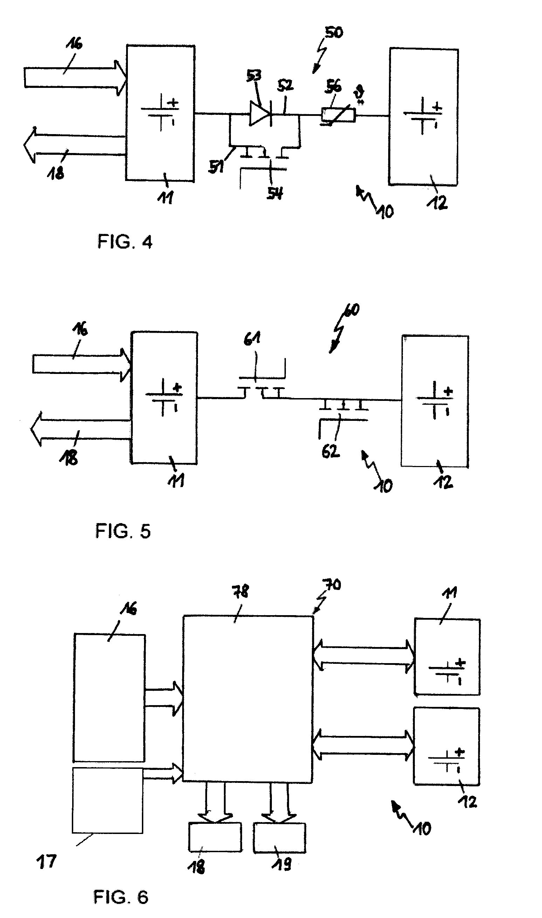

Besonders bevorzugt ist es, dass für die vorrangige Ladung des ersten Energiespeichers durch geeignete Bauelemente, wie ein oder mehrere Halbleiter (z.B. Dioden oder Transistoren), die parallel oder in Reihe zu der Strombegrenzung, der Stromregelung oder dem Trennschalter angeordnet sind, ein Spannungsgefälle zwischen dem ersten Energiespeicher und dem zweiten Energiespeicher aufrechterhalten wird. Für die bevorzugte Entladung des ersten Energiespeichers braucht es ebenfalls ein Spannungsgefälle, das eine höhere Spannung am zweiten Energiespeicher ermöglicht als am ersten Energiespeicher. Da sich die Stromrichtung bei Ladung und Entladung umkehrt, können dies für Ladung und Entladung prinzipiell dieselben Bauelemente sein. Durch Parallel- oder Reihenschaltung besonders mit Halbleiterelementen ist es möglich, unterschiedliche Kriterien für Ladung und Entladung umzusetzen. So ist zum Beispiel (wie in Fig. 4 gezeigt) mit einer parallel geschalteten Diode stets ein Laden der Lithiumbatterie mit weitgehend konstantem Spannungsgefälle möglich, während ein Rückstrom in diesem Zweig verhindert ist, der dann beispielsweise mittels eines MOS-FET-Transistors separat geschaltet werden kann.

Ein besonders bevorzugtes Speichersystem zeichnet sich dadurch aus, dass in der Schaltung zusätzlich oder alternativ zur Strombegrenzung ein Trennschalter vorhanden ist und dass die Funktionen Strombegrenzung und/oder Trennschalter durch einen oder mehrere Halbleiter gebildet sind, die insbesondere als Transistoren, MOS-FET-Transistoren oder mehrere antiseriell verschaltete Transistoren ausgebildet sind, die schaltend, analog oder getaktet angesteuert werden. Bestimmte Bauelemente aus Halbleitern ermöglichen es, bei unterschiedlicher Ansteuerung sowohl einen Spannungsabfall zu verursachen als auch die Funktion eines Trennschalters zu übernehmen, die je nach Richtung des Stromflusses unterschiedlich angesteuert werden. Dies wird insbesondere mit antiseriell verschalteten Transistoren erreicht.

Es ist weiterhin vorteilhaft, wenn die Speicherkapazität des zweiten Energiespeichers etwa einem Tagesbedarf des wenigstens einen elektrischen Verbrauchers beträgt und die Speicherkapazität des ersten Energiespeichers das typischerweise ein- bis sechsfache dieser Kapazität als Reservekapazität beträgt. Die Größe der benötigten Reservekapazität richtet sich nach den Ertrags- und Lastprofilen sowie der geforderten Versorgungssicherheit. Dadurch wird die Bleibatterie an einem Tag mit typischen Erträgen und Lasten nicht stark entladen, und der Großteil der Ladezyklen wird von der Lithiumbatterie abgedeckt. Die Bleibatterie steht als Reservekapazität zur Verfügung und kann genutzt werden, um erhöhten Energiebedarf oder Zeiten mit geringerem Ertrag abzudecken, was vor allem bei regenerativen Energieträgern wie Fotovoltaik oder Windkraft sinnvoll ist. Zudem ist eine große Bleibatterie gut in der Lage, große Ströme und Lastspitzen zu versorgen, wie sie z.B. beim Einschalten von Motoren auftreten.

Die wenigstens eine Energiequelle wird insbesondere von einer Fotovoltaik-Anlage, einer Lichtmaschine, einem Generator und/oder von einem Energieverteilungsnetz gebildet. Die Kombination der beiden Energiespeicher ist vor allem da sinnvoll, wo dezentral oder regenerativ verfügbare Energie derart genutzt wird, dass die Energie über Fotovoltaik oder über einen Generator in elektrische Energie gewandelt wird oder wenn die Ladezeit der Batterie begrenzt ist - wie die Aufladung während einer zeitlich begrenzten Autofahrt. Zudem ist das System sehr gut geeignet, um Verbraucher bei unzuverlässigem Stromnetz kontinuierlich zu versorgen. Hierbei ist auch die Lithiumbatterie für häufige kurze Unterbrechungen vorgesehen und die Bleibatterie für seltenere größere Unterbrechungen.

Dabei ist es besonders vorteilhaft, wenn der erste Energiespeicher aus einem Energieverteilungsnetz geladen wird, während die Kapazität des zweiten Energiespeichers als Pufferspeicher für unregelmäßig verfügbare Energie, wie regenerative Energie, vorgehalten wird. In Kombination von Energieverteilungsnetz und regenerativer oder dezentral gewandelter Energie kann die Bleibatterie als Backup für die Versorgung elektrischer Lasten verwendet werden, und wird aus dem Energieverteilungsnetz auch in vollgeladenem Zustand gehalten. Solange genügend Energie aus anderen Energieträgern zur Verfügung steht, werden Überschüsse in der Lithiumbatterie gepuffert und von dort auch vorrangig zur Bedienung der Last(en) bereitgestellt. Erst wenn keine Energie in der Lithiumbatterie mehr verfügbar ist, wird diese aus dem Energieverteilungsnetz bezogen und erst bei einem längeren Ausfall oder zur Pufferung eines kurzfristigen Spitzenbedarfs die Bleibatterie verwendet.

Schließlich ist es von Vorteil, wenn beide Energiespeicher mit Einrichtungen zur Messung ihrer Spannungen und/oder ihrer Ströme versehen sind und die von den Einrichtungen gemessenen Werte als Steuersignale der Stromregelung, der Stromsteuerung und/oder dem Trennschalter zuführbar sind. Damit kann eine Auswertung dieser Informationen, beispielsweise in einem Mikrocontroller, dazu verwendet werden, die aktuellen Zustände der Batterien zu erfassen und entsprechende Signale an die Schaltung für die Regelung oder Steuerung oder auch für einen Balancer zu generieren.

Nachfolgend werden Ausführungsbeispiele der erfindungsgemäßen Vorrichtung unter Bezugnahme auf die Zeichnungen näher erläutert. Es zeigt:
- Fig. 1: eine erste allgemeine Ausführungsform eines Speichersystems mit einer Strombegrenzung und einem Trennschalter zwischen den beiden Energiespeichern;
- Fig. 2: eine zweite Ausführungsform eines Speichersystems mit einer Parallelschaltung, die unterschiedliche Leitungswege für Ladung und Entladung vorsieht,
- Fig. 3: eine dritte Ausführungsform eines Speichersystems mit einem dem ersten Energiespeicher eingangsseitig vorgeschalteten Laderegler und einer Stromregelung zwischen den beiden Energiespeichern, die aus einer Parallelschaltung eines Transistors und einer Diode und einer dazu in Reihe geschalteten Strombegrenzung gebildet ist;
- Fig. 4: eine vierte Ausführungsform eines Speichersystems mit einer Stromregelung analog zur Fig. 3;
- Fig.5: eine fünfte Ausführungsform eines Speichersystems bei der zwischen den beiden Energiespeichern zwei anti-seriell angeordnete Transistoren bzw. MOSFET eingesetzt werden;
- Fig. 6: eine sechste Ausführungsform eines Speichersystems bei dem die Strombegrenzung und/oder die Stromregelung in einen Laderegler integriert ist;
- Fig. 7: ein Diagramm zur Verdeutlichung des Ladezustands der zwei verschiedenen Energiespeicher; und
- Fig. 8: ein Diagramm zur Verdeutlichung des Spannungsverlaufs der zwei verschiedenen Energiespeicher passend zu Fig. 7.

Die folgenden Ausführungsbeispiele sind anhand eines Systems mit einem von einem Bleiakkumulator mit 12V Nennspannung gebildeten ersten Energiespeicher 11 und einem vier Zellen mit einer Nennspannung von etwa 13,2V aufweisenden Lithium-Eisen-Phosphat-Akkumulator als zweitem Energiespeicher 12 dargestellt. Es sind jedoch auch andere Energiespeicher und andere Spannungslevel einsetzbar, soweit diese entsprechend der Patentansprüche einsetzbar sind.

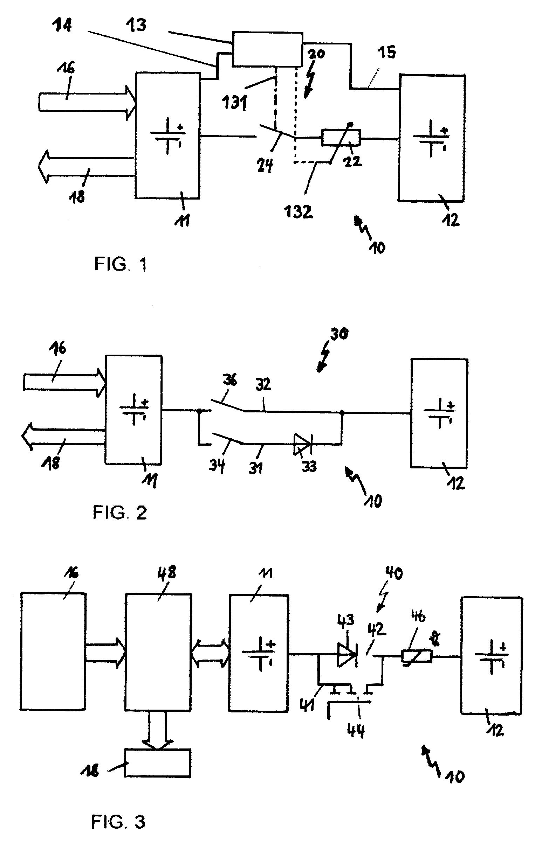

In Fig. 1 ist eine erste Ausführungsform eines Speichersystems 10 mit einem ersten Energiespeicher 11 und einem zweiten Energiespeicher 12 gezeigt. Der erste Energiespeicher 11 ist mit einer Energiequelle 16 und mit wenigstens einer Last 18 verbunden. Zwischen dem ersten Energiespeicher 11 und dem zweiten Energiespeicher 12 sind eine Strombegrenzung 22 und ein Schalter 24 angeordnet, die beispielhaft durch einen verstellbaren Widerstand 22 und einen dazu in Reihe geschalteten Schalter 24 gebildet sind.

In Fig. 1 ist schematisch eine auch für die anderen Figuren 2 bis 6 verwendbare und bei diesen nicht gezeigte Signalverarbeitung z.B. durch einen Mikrocontroller 13 exemplarisch dargestellt. Der Mikrocontroller 13 ist eingangsseitig über eine Messwerterfassung 14 mit dem ersten Energiespeicher 11 und über eine Messwerterfassung 15 mit dem zweiten Energiespeicher 12 verbunden. Die Messwerterfassungen 14 bzw. 15 liefern beispielsweise den aktuellen Spannungswert V₁₁ bzw. V₁₂ des ersten und zweiten Energiespeichers 11 bzw.12 als Eingangswerte an ein im Mikrocontroller 13 gespeichertes Steuerungs- oder Regelungsprogramm, das entsprechend der gelieferten Messwerte einen ersten Schaltausgang 131 zur Betätigung des Schalters 24 und/oder einen zweiten Schaltausgang 132 zur Verstellung des verstellbaren Widerstandes 22 ansteuert. Alternativ oder ergänzend zu den Spannungswerten V₁₁ bzw. V₁₂ können auch die von und zu den Energiespeichern 11 bzw.12 fließenden Ströme I₁₁ bzw. I₁₂ durch die Messwerterfassungen 14 bzw. 15 erfasst und als Eingangssignal an den Mikrocontroller 13 weitergeleitet werden. Als weitere Messwerteingänge können auch der von der Energiequelle 16 aktuell gelieferte Strom und/oder der von der Last 18 aktuell bezogene Strome und/oder der aktuell zwischen den Energiespeichern 11 bzw. 12 fließende Strom an den Mikrocontroller 13 geliefert werden. Der Mikrocontroller 13 ist auch für die im Folgenden beschriebenen Ausführungsformen gemäß den Figuren 2 bis 6 zur Ansteuerung der dort verwendeten Schalter und Transistoren verwendbar.

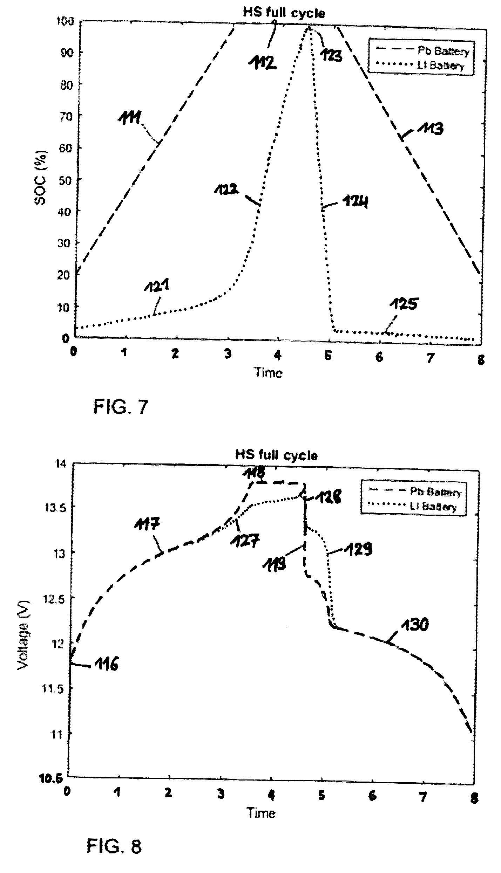

Das Zusammenwirken der beiden Energiespeicher im Speichersystem ist in Fig. 7 und 8 am Beispiel von Bleiakkumulator und Lithium-Eisen-Phosphat-Akkumulator beschrieben. Darauf bezogen wird der Widerstand während der Ladung so gewählt, dass der zwischen den Ladekurven 127 und 118 entstehende Spannungsunterschied gebildet wird. Bei der Entladung wird der Widerstand entweder minimal gewählt, wodurch die zweite Batterie 12 die Last auf höherem Spannungslevel versorgt, oder vor allem bei großen Strömen der Widerstandswert so weit erhöht, dass die Last auf dem Spannungsniveau der ersten Batterie 11 versorgt werden kann. Der Trennschalter 24 trennt die zweite Batterie 12 zum Schutz vor Über- oder Unterspannungen wie bei so großen Strömen bzw. Spannungseinbrüchen, die durch Spannungsabfall in der Stromregelung nicht sinnvoll auszugleichen sind, beispielsweise der Startvorgang eines Kraftfahrzeugs, der eine große Lastspitze sehr kurzer Dauer darstellt.

In Fig. 2 ist eine zweite Ausführungsform eines Speichersystems 10 mit einer Parallelschaltung gezeigt, die unterschiedliche Leitungswege für Ladung und Entladung vorsieht (gemäß Anspruch 9) jedoch in diesem Fall ohne Strombegrenzung. Eine gemeinsam mit einem Schalter 34 in einem ersten Zweig 31 einer Parallelität angeordnete Diode 33 erzeugt dort ein Spannungsgefälle für eine vorrangige Ladung des ersten Energiespeichers 11, was bei der Ladung des zweiten Energiespeichers 12 einen weitgehend konstanten Spannungsabfall von ca. 0,5V bedeutet und die Ladung des ersten Energiespeichers 11 priorisiert. Ein parallel angeordneter Schalter 36 ist beim Laden des zweiten Energiespeichers 12 geöffnet, so dass für das Laden der untere Zweig 31 über den geschlossenen Schalter 34 und die Diode 34 verwendet wird. Der obere Zweig 32 ist für die Entladung des zweiten Energiespeichers 12 vorgesehen. Einfache Regeln für die Schaltung sind, den Schalter 36 geschlossen zu halten wenn eine Strommessung einen Strom von der zweiten Batterie 12 in die erste Batterie 11 anzeigt, oder das Spannungslevel der ersten Batterie 11 unterhalb der Spannung der zweiten Batterie 12 liegt. Der Schalter 34 kann im normalen Betrieb geschlossen bleiben und wird bei zu hohen Spannungen geöffnet um die zweite Batterie 12 vor Überspannung zu schützen.

In Fig. 3 ist eine dritte Ausführungsform eines Speichersystems 10 dargestellt, bei der die erfindungsgemäße Schaltung (nach Ansprüchen 1-5 mit einer Anordnung nach Anspruch 7) zwischen dem ersten Energiespeicher 11 und dem zweiten Energiespeicher 12 angeordnet ist. Die Schaltung zwischen den Batterien ist hier nur beispielhaft für eine der möglichen Schaltungen eingezeichnet und wird in Fig. 4 näher beschrieben.

Ein Laderegler 48, der eingangsseitig mit der Energiequelle 16 und ausgangsseitig mit der wenigstens einen Last 18 verbunden ist, ist am ersten Energiespeicher 11 angeschlossen. Die erfindungsgemäße Schaltung und die zweite Batterie 12 bilden eine Einheit, die ebenfalls an die erste Batterie 11 angeschlossen sind und sich unterstützend auf die erste Batterie 11 auswirken. Der Laderegler 48 kann in diesem Fall von einer handelsüblichen Komponente für Bleiakkus gebildet werden. Der Laderegler 48 arbeitet unabhängig von der vorstehend beschriebenen Schaltung zwischen dem ersten Energiespeicher 11 und dem zweiten Energiespeicher 12. Der Laderegler 48 bedient hier vorrangig direkt die Last 18 und lädt die erste Batterie 11 nur dann, wenn mehr Energie von der Energiequelle 16 kommt, als die Last 16 verbraucht.

In Fig. 4 ist eine vierte Ausführungsform eines Speichersystems 10 dargestellt, mit einem Transistor 54 und parallel geschalteter Diode 53, die in Reihe mit einer Strombegrenzung 56 angeordnet sind. Der Transistor 54 und die parallel dazu geschaltete Diode 53 bewirken eine Ladung des zweiten Energiespeichers 12 mit einem Spannungsabfall über die in einem zweiten Leitungsweg 52 angeordnete Diode 53 (wie in Fig. 2 beschrieben), während im dazu parallelen ersten Leitungsweg 51 der Transistor 54 für die Entladung der zweiten Batterie 12 durchgeschaltet wird. Die in diesem Fall von einem PTC-Widerstand gebildete, zur Parallelität aus Transistor 54 und Diode 53 in Reihe geschaltete Strombegrenzung 56 stellt sicher, dass kein zu hoher Strom in den zweiten Energiespeicher 12 und aus dem zweiten Energiespeicher 12 fließt, so dass die den zweiten Energiespeicher 12 bevorzugt bildende Lithiumbatterie und die Komponenten der Schaltung nur für einen entsprechenden maximalen Strom ausgelegt sein müssen.
Der PTC-Widerstand 46 ist vom Strom in die und aus der zweiten Batterie 12 durchflossen. Bei ansteigendem Strom erwärmt sich dieser und erhöht dabei gleichzeitig selbsttätig seinen Widerstand, wodurch er den Strom zum zweiten Energiespeicher 12 unter Abgabe einer geringen konstanten Verlustleistung von beispielsweise 3 W dauerhaft begrenzt. Ein erfindungsgemäßes System, dass zwischen dem ersten Energiespeicher 11 und dem zweiten Energiespeicher 12 nur einen PTC-Widerstand 46 aufweist, stellt unter Erfüllung aller weiterer Merkmale des Anspruchs 1 die einfachste Ausführungsform der Erfindung dar, die ohne zusätzliche Regelung, Steuerung oder Messwerterfassung 14, 15 auskommt. In Fig. 5 ist eine fünfte Ausführungsform eines Speichersystems 10 dargestellt, bei der zwei anti-seriell angeordnete Transistoren (z.B. MOSFET Transistoren) 61 bzw. 62 eingesetzt werden. Mit dieser Anordnung (nach Anspruch 10) ist es möglich, die Stromflüsse in beide Richtungen zu regeln oder zu steuern oder in eine Richtung oder beide Richtungen zu unterbrechen. Die Möglichkeiten der Regelung und Steuerung sind hier sehr vielfältig und so kann hier die Zuschaltung oder Abschaltung des zweiten Energiespeichers 12 zum Laden oder Entladen nicht nur spontan, sondern auch gleitend erfolgen. Die Ansteuerung dieser Schaltung ist daher vor allem mit einer im Zusammenhang mit Fig. 1 beschriebenen Auswertung und Verarbeitung von Messdaten 14, 15 in einer signalverarbeitenden Steuerung bzw. Regelung, beispielsweise durch einen Mikrocontroller 13 sinnvoll.

In Fig. 6 ist eine sechste Ausführungsform eines Speichersystems 10 (nach den Ansprüchen 1-5 mit einer Anordnung nach Anspruch 6) dargestellt. Dabei wird eine Schaltung analog zu den vorstehend beschriebenen Ausführungsbeispielen gemäß einer der Figuren 1 bis 5 einschließlich einer Laderegelung, einer Schutz- und Balancerschaltung als zentrale Laderegler-Einheit 78 ausgebildet, an die alle Energiespeicher 11, 22, alle Lasten 18, 19 und alle Energiequellen 16, 17 angeschlossen werden.

Unter Balancerschaltung versteht der Fachmann eine Schaltung, der die gleichmäßige Spannung bzw. Vollladung aller Zellen innerhalb eines Akkupacks bzw. einer Batterie aus Akkumulatoren 11 bzw. 12 gewährleistet. Das sind beispielsweise Widerstände parallel zu jeder einzelnen Zelle, die zugeschaltet werden, wenn eine Zellspannung einen vorgegebenen Wert übersteigt. Dann wird an dieser Zelle Energie in Wärme gewandelt, was deren Spannung etwas absenkt, während die anderen Zellen, die noch nicht voll sind, weiter geladen werden.

In Fig. 7 ist der Ladezustand (SOC = State of Charge) der beiden Energiespeicher 11 bzw. 12 über der Zeitachse aufgetragen. Im zeitlichen Ablauf ist eine vollständige Ladung mit anschließender Entladung darstellt. Zuerst wird der erste Energiespeicher 11 (Bleibatterie) vorrangig geladen (wie mit dem ansteigenden Ast 111 der gestrichelten Ladekurve des ersten Energiespeichers 11 angedeutet), während der zweite Energiespeicher 12 (Lithiumbatterie) unter gleicher Spannung zunächst nur in geringem Maße mit geladen wird, wie dies durch den schwach ansteigenden Ast 121 der punktierten Ladekurve des zweiten Energiespeichers 12 angedeutet ist. Wenn der erste Energiespeicher 11 (Bleibatterie) dann mit konstanter Spannung geladen wird (wie mit dem waagerechten Ast 112 der gestrichelten Ladekurve des ersten Energiespeichers 11 angedeutet) und nicht mehr allen verfügbaren Strom aufnehmen kann, erfolgt die Ladung des zweiten Energiespeichers 12 (Lithiumbatterie) mit dem Strom, den die Bleibatterie nicht mehr aufnehmen kann entsprechend des Abschnitts 122 der punktierten Ladekurve. Entladen wird in diesem Fall vorrangig die Lithiumbatterie 12, die eine höhere Spannung aufweist als die Bleibatterie 11 entsprechend des abfallenden Asts 124 der punktierten Ladekurve. Hier nicht dargestellt ist die synchrone Entladung beider Energiespeicher 11 bzw. 12 auf dem Spannungslevel der ersten Batterie oder das Fließen von Umladeströmen vom zweiten Energiespeicher 12 in den ersten Energiespeicher 11, zu denen es bei nicht ganz voller Bleibatterie kommen kann während die Lithiumbatterie auf hohem Spannungslevel die Last mit Energie versorgt.

In Fig. 8 ist der Spannungsverlauf der beiden Batterien 11 bzw. 12 über der Zeitachse aufgetragen, entsprechend der in Fig. 7 dargestellten Ladung und Entladung beider Energiespeicher 11 bzw. 12. Beim Laden muss die Spannung der Bleibatterie 11 zeitweise höher sein, damit diese bevorzugt geladen wird. Dafür wird die zweite Batterie 12 von der ersten Batterie 11 getrennt oder ein Spannungsabfall bzw. eine Strombegrenzung durch Widerstand oder Halbleiter aktiviert, wie in den Figuren 1 bis 6 anhand unterschiedlicher Ausführungsbeispiele bereits erläutert wurde. Beim Entladen mit geringem Strom wird wie dargestellt zuerst die Lithiumbatterie 12 entladen. Dabei wird das Spannungsniveau der Bleibatterie 11 auf die Spannung der Lithiumbatterie 12 angehoben, was geringe Umladeströme aus der Lithiumbatterie 12 in die Bleibatterie 11 bedeuten kann. Bei Entladen mit großem Strom wird der Entladestrom des zweiten Akkus 12 begrenzt, indem ein Spannungsgefälle geschaffen wird. Dafür werden beide Batterien 11 und 12 gemeinsam entladen, was für beide Batterien einen vorteilhaften geringeren Entladestrom bedeutet. Im Bereich unter ca. 13V, was der typischen Entladespannung der Bleibatterie 11 entspricht, ändert die Lithium-Eisen-Phosphat- Batterie 12 ihren Ladezustand nur um wenige Prozent, wie in Fig. 7 dargestellt. Ihre Spannung passt sich der Spannung der Bleibatterie 11 an. Optional kann die weitgehend leere Lithiumbatterie 12 auch durch einen Trennschalter 24, 36 von der Bleibatterie 11 getrennt werden, um eine sehr tiefe Entladung zu vermeiden.

**Bezugszeichenliste**

| | | | | |
|---|---|---|---|---|
| 10 | Speichersystem | | 41 | (erster) Leitungsweg |
| 11 | erster Energiespeicher (Blei-Akkumulator) | | 42 | (zweiter) Leitungsweg |
| | | | 43 | Diode |
| 12 | zweiter Energiespeicher (Lithium-Akkumulator) | | 44 | Transistor |
| | | | 46 | Strombegrenzung (z.B. PTC-Sicherung) |
| 13 | Signalverarbeitung (z.B. Mikrocontroller) | | | |
| | | | 48 | Laderegler mit Lastausgang |
| 131 | Signalausgang | | 50 | Schaltung (Fig. 4) |
| 132 | Signalausgang | | 51 | (erster) Leitungsweg |
| 14 | Messwerterfassung (z.B. Spannung, Strom) | | 52 | (zweiter) Leitungsweg |
| | | | 53 | Diode |
| 15 | Messwerterfassung (z.B. Spannung, Strom) | | 54 | Transistor |
| | | | 56 | Strombegrenzung (z.B. PTC-Sicherung) |
| 16 | Energiequelle (z.B. PV-Anlage) | | | |
| | | | 60 | Schaltung (Fig. 5) |
| 17 | Energiequelle (z.B. Energieverteilungsnetz) | | 61 | Transistor |
| | | | 62 | Transistor |
| 18 | Verbraucher (Last) | | 70 | Schaltung (Fig. 6) |
| 19 | Verbraucher (Last) | | 78 | erfindungsgemäßes System in Laderegler integriert |
| 20 | Schaltung (Fig. 1) | | | |
| 22 | Strombegrenzung (z.B. verstellbarer Widerstand) | | 111 | (ansteigende) Ladekurve (Laden von 11 mit hohem Strom) |
| 24 | (Trenn-) Schalter | | 112 | Ladekurve (Vollladung von 11 bei geringem Strom) |
| 30 | Schaltung (Fig. 2) | | | |
| 31 | (erster) Leitungsweg | | 113 | (abfallende) Entladekurve (von 11) |
| 32 | (zweiter) Leitungsweg | | | |
| 33 | Diode | | 121 | (flach ansteigende) Ladekurve (kleiner Ladestrom von 12) |
| 34 | erster (Trenn-) Schalter | | | |
| 36 | zweiter (Trenn-) Schalter | | 122 | (steil ansteigende) Ladekurve (hoher Ladestrom von 12) |
| 40 | Schaltung (Fig. 3) | | | |
| 123 | Vollladung (11 und 12 voll) | | 127 | Ladekurve (von 12, Spannung niedriger als von 11) |
| 124 | (steil abfallende) Entladekurve | | | |
| | (vorrangige Entladung von 12) | | 128 | Vollladung (von 12) |
| 125 | (flach abfallende) Entladekurve (12 ist weitgehend leer) | | 129 | Entladespannung (von 12, ist höher als die von 11) |
| 116 | Ladebeginn (vorrangig von 11) | | 130 | Entladespannung ( von11, dabei ist12 weitgehend leer) |
| 117 | Lade-Spannungsverlauf (bestimmt durch 11 bei Ladung | | | |
| | mit hohem Strom) | | + | Plus-Pol |
| 118 | Laden mit Konstantspannung (von 11) | | - | Minus-Pol |
| 119 | (abfallende) Betriebsspannung (von 11 und von 12 aufgrund beginnender Entladung | | | |

## Patentansprüche

1. Speichersystem (10) zur Speicherung elektrischer Energie mit wenigstens einem ersten Energiespeicher (11) und mit wenigstens einem zweiten Energiespeicher (12), die eine unterschiedliche Zyklenfestigkeit und/oder Lade- und Entladecharakteristik aufweisen und durch eine Parallelschaltung zur Entladung mit wenigstens einem elektrischen Verbraucher (18; 19) und zur Ladung mit wenigstens einer Energiequelle (16) verbunden sind, **dadurch gekennzeichnet, dass** beide Energiespeicher (11; 12) eine zumindest annähernd gleiche Nennspannung aufweisen und dass zwischen den beiden Energiespeichern (11; 12)) eine als Strombegrenzung (22; 46) und/oder als Stromsteuerung oder Stromregelung (20; 30; 40; 50; 60; 70) und/oder als Trennschalter (24; 34; 36) ausgebildete Schaltung (20; 30; 40; 50; 60; 70) zur Steuerung einer vorrangigen Ladung des wenigstens einen ersten Energiespeichers (11) und/oder zur Steuerung einer vorrangigen Entladung des wenigstens einen zweiten Energiespeichers (12) vorgesehen ist.

2. Speichersystem nach Anspruch 1, **dadurch gekennzeichnet, dass** der erste Energiespeicher (11) von einem oder mehreren Bleiakkumulatoren (11) gebildet wird.

3. Speichersystem nach einem der vorhergehenden Ansprüche, **dadurch gekennzeichnet, dass** der zweite Energiespeicher (12) von einem oder mehreren Lithium-Akkumulatoren, Lithium-Eisen-Phosphat- Akkumulatoren, Lithium-Schwefel- Akkumulatoren, Lithium-Titanat-Akkumulatoren oder Lithium-Luft- Akkumulatoren gebildet wird, dessen Spannungsbereich über weite Teile der Ladung und Entladung der Ladespannung des ersten Energiespeichers (11) sehr ähnlich ist.

4. Speichersystem nach einem der vorhergehenden Ansprüche, **dadurch gekennzeichnet, dass** die Schaltung (20; 30; 40; 50; 60; 70) die bevorzugte Ladung des ersten Energiespeichers (11) ermöglicht sowie die Entladung des ersten und der zweiten Energiespeichers (11; 12) derart steuert, dass bei einem kleinen Entladestrom vorrangig der zweite Energiespeicher (12) entladen wird und bei einem großen Entladestrom beide Energiespeicher (11; 12) synchron entladen werden, wofür durch die Strombegrenzung (22; 46) ein Spannungsgefälle zwischen dem ersten und dem zweiten Energiespeicher (11 bzw. 12) aufrechterhalten wird.

5. Speichersystem nach einem der vorhergehenden Ansprüche, **dadurch gekennzeichnet, dass** die Schaltung (20; 30; 40; 50; 60; 70) die Nachladung des ersten Energiespeichers (11) aus dem zweiten Energiespeicher (12), das bevorzugte Laden oder Entladen eines der Energiespeicher (11 oder 12) oder beider Energiespeicher (11; 12) steuert.

6. Speichersystem nach einem der Ansprüche 1 bis 5, **dadurch gekennzeichnet, dass** die Schaltung (20; 30; 40; 50; 60; 70) in einen Laderegler (78) integriert ist.

7. Speichersystem nach einem der Ansprüche 1 bis 5, **dadurch gekennzeichnet, dass** Schaltung (20; 30; 40; 50; 60; 70) als separate Schaltung (20; 30; 40; 50; 60; 70) zwischen dem ersten und zweiten Energiespeicher (11 bzw. 12) ausgebildet ist.

8. Speichersystem nach einem der vorhergehenden Ansprüche, **dadurch gekennzeichnet, dass** die Strombegrenzung (22; 46) als ohmscher Widerstand (22), als verstellbarer Widerstand (22), als PTC-Sicherung (46) oder als Halbleiter (43; 53; 44; 54; 61; 62) ausgebildet ist.

9. Speichersystem nach einem der vorhergehenden Patentansprüche, **dadurch gekennzeichnet, dass** für die vorrangige Ladung des ersten Energiespeichers (11) durch einen oder mehrere Halbleiter (43; 53; 44; 54; 61; 62) zusätzlich ein Spannungsgefälle zwischen dem ersten Energiespeicher (11) und dem zweiten Energiespeicher (12) aufrechterhalten wird.

10. Speichersystem nach einem der vorhergehenden Ansprüche, **dadurch gekennzeichnet, dass** in der Schaltung (20; 30; 40; 50; 60; 70) zusätzlich oder alternativ zur Strombegrenzung (22; 46) ein Trennschalter (24; 34; 36) vorhanden ist und dass die Funktionen Strombegrenzung (22; 46) und/oder Trennschalter (24; 34; 36) durch einen oder mehrere Halbleiter (43; 53; 44; 54; 61; 62) gebildet sind, die insbesondere als Transistoren, MOS-FET-Transistoren (44; 54) oder mehrere antiseriell verschaltete Transistoren (61; 62) ausgebildet sind, die schaltend, analog oder getaktet betrieben werden.

11. Speichersystem nach einem der vorhergehenden Patentansprüche, **dadurch gekennzeichnet, dass** die Speicherkapazität des zweiten Energiespeichers (12) etwa einem Tagesbedarf des wenigstens einen elektrischen Verbrauchers (18; 19) beträgt und die Speicherkapazität des ersten Energiespeichers (11) das ein- bis sechsfache dieser Kapazität als Reservekapazität beträgt.

12. Speichersystem gemäß einem der vorhergehenden Patentansprüche, **dadurch gekennzeichnet, dass** die Energiequelle (16) von einer Fotovoltaik-Anlage, einer Lichtmaschine, einem Generator oder einem Energieverteilungsnetz (17) gebildet wird.

13. Speichersystem gemäß einem der vorhergehenden Patentansprüche, **dadurch gekennzeichnet, dass** der erste Energiespeicher (11) aus einem Energieverteilungsnetz (17) geladen wird, während die Kapazität des zweiten Energiespeichers (12) als Pufferspeicher für eine unregelmäßig verfügbare Energiequelle (16), wie regenerative Energie, vorgehalten wird.

14. Speichersystem gemäß einem der vorhergehenden Patentansprüche, **dadurch gekennzeichnet, dass** der zweite Energiespeicher (12) bei Unterschreiten einer Grenztemperatur (Tₘᵢₙ) vom ersten Energiespeicher (11) im Ladebetrieb abgekoppelt oder dessen Ladestrom begrenzt wird und anstehende überschüssige Energie und/oder im Speichersystem entstehende Abwärme insbesondere einer Balancerschaltung zur Aufheizung des zweiten Energiespeichers (12) nutzbar ist.

15. Speichersystem gemäß einem der vorhergehenden Patentansprüche, **dadurch gekennzeichnet, dass** beide Energiespeicher (11; 12) mit Einrichtungen zur Messung ihrer Spannungen (V11; V12) und/oder ihrer Ströme (I11; I12) versehen sind und die von den Einrichtungen gemessenen Werte als Steuersignale einem Mikrocontroller (13), der Stromsteuerung oder Stromregelung (20; 30; 40; 50; 60; 70) und/oder dem Trennschalter (24; 34; 36) und/oder einer Balancerschaltung zuführbar sind.
